# EUROPEAN PATENT APPLICATION

(11) **EP 4 686 315 A1**
(43) Date of publication of application: **28.01.2026**
(21) Application number: 25190176.5
(22) Date of filing: 17.07.2025
(51) Int. Cl.: H04W 76/15, H04W 48/20, H04W 72/20, H04W 84/12

(54) **COMMUNICATION APPARATUS, COMMUNICATION METHOD, AND PROGRAM**

(30) Priority: 25.07.2024 JP 2024120331
(71) Applicant: CANON KABUSHIKI KAISHA, Tokyo 146-8501 (JP)
(72) Inventor: SAWADA, Tetsuya, Tokyo 146-8501 (JP)
(74) Representative: Canon Europe Limited

(57) **Abstract**

A communication apparatus for communicating, via an access point configured to perform communication in accordance with a communication method defined in an IEEE 802.11 standard series, with another communication apparatus connected to the access point, performs first communication with the access point using one of single-link communication and multi-link communication; acquires predetermined information concerning second communication performed between the other communication apparatus and the access point; and executes, based on the predetermined information, control of which of single-link communication and multi-link communication is used to perform the first communication.

## Description

### TECHNICAL FIELD

The present disclosure relates to a link control technique in a communication apparatus capable of concurrently using a plurality of links.

### BACKGROUND

Along with a recent increase in amount of communicated data, communication techniques such as wireless Local Area Network (LAN) have been developed. As a major communication standard of the wireless LAN, the Institute of Electrical and Electronics Engineers (IEEE) 802.11 standard series is known. The IEEE 802.11 standard series includes standards such as IEEE 802.11a/b/g/n/ac/ax/be.

For example, the IEEE 802.11 be standard has formulated multi-link communication in which one access point (AP) establishes a plurality of links with one station (STA) using a plurality of different frequencies and performs communication using these links. An AP and an STA supporting multi-link communication are called an AP Multi-Link Device (MLD) and a Non-AP MLD, respectively. The Non-AP MLD can also called an STA MLD. In multi-link communication, by linking and coordinating a plurality of wireless communication interfaces of one MLD, a link established using each wireless communication interface can effectively be used. For example, it is expected to improve throughput, frequency use efficiency, a communication latency, and the like by associating each link with each type of traffic to be communicated when establishing links between an AP MLD and a Non-AP MLD. An identifier used to classify the type of traffic is called a Traffic ID (TID). An identifier used to identify a link is called a Link ID. For example, by associating these identifiers with each other (TID-to-Link Mapping), the type of traffic and the link can be associated with each other. Note that the TID can be used to assign a priority to each type of traffic when transmitting a plurality of types of traffic. That is, the priority of transmission can be assigned to and associated with each TID. Japanese Patent No. 7169465 describes a technique for setting links to be used for multi-link communication between an AP MLD and a Non-AP MLD.

### SUMMARY

In a case where two STAs connected to one AP communicate with each other via the AP, the performance of overall communication between the STAs may degrade due to the difference between the states of communications established between the AP and the STAs.

The present disclosure provides a link control technique for improving performance of communication between a communication apparatus capable of executing multi-link communication and another communication apparatus via an AP.

The present disclosure in its first aspect provides a communication apparatus as specified in claim 1. Optional features are specified in claim 2 to 12.

The present disclosure in its second aspect provides a communication method as specified in claim 13.

The present disclosure in its third aspect provides a computer program as specified in claim 14.

Features of the present disclosure will become apparent from the following description of embodiments with reference to the attached drawings. The following description of embodiments are described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a view showing an example of the configuration of a wireless communication system;
Fig. 2 is a block diagram showing an example of the hardware arrangement of a communication apparatus;
Fig. 3 is a block diagram showing an example of the functional arrangement of the communication apparatus;
Fig. 4 is a flowchart illustrating an example of an operation when an STA communicates with another STA via an AP;
Fig. 5 is a view showing an example of the structure of an Action frame for requesting link information;
Fig. 6 is a view showing an example of the structure of an Action frame for providing link information;
Fig. 7 is a flowchart illustrating an example of an operation procedure when the STA performs link control;
Fig. 8 is a sequence chart showing an example of a sequence between the AP and the STAs;
Fig. 9 is a flowchart illustrating an example of an operation when the STA communicates with another STA via the AP;
Fig. 10 is a view showing an example of the structure of a data frame for requesting link information;
Fig. 11 is a view showing an example of the structure of a data frame for providing link information;
Fig. 12 is a flowchart illustrating an example of an operation procedure when the STA performs link control;
Fig. 13 is a sequence chart showing an example of a sequence between the AP and the STAs; and
Fig. 14 is a flowchart illustrating an example of an operation procedure when the STA performs link control.

### DESCRIPTION OF THE EMBODIMENTS

Hereinafter, embodiments will be described in detail with reference to the attached drawings. Note, the following embodiments are not intended to limit the scope of the claimed disclosure. Multiple features are described in the embodiments, but limitation is not made on a disclosure that requires all such features, and multiple such features may be combined as appropriate. Furthermore, in the attached drawings, the same reference numerals are given to the same or similar configurations, and a redundant description thereof is omitted.

### (System Configuration)

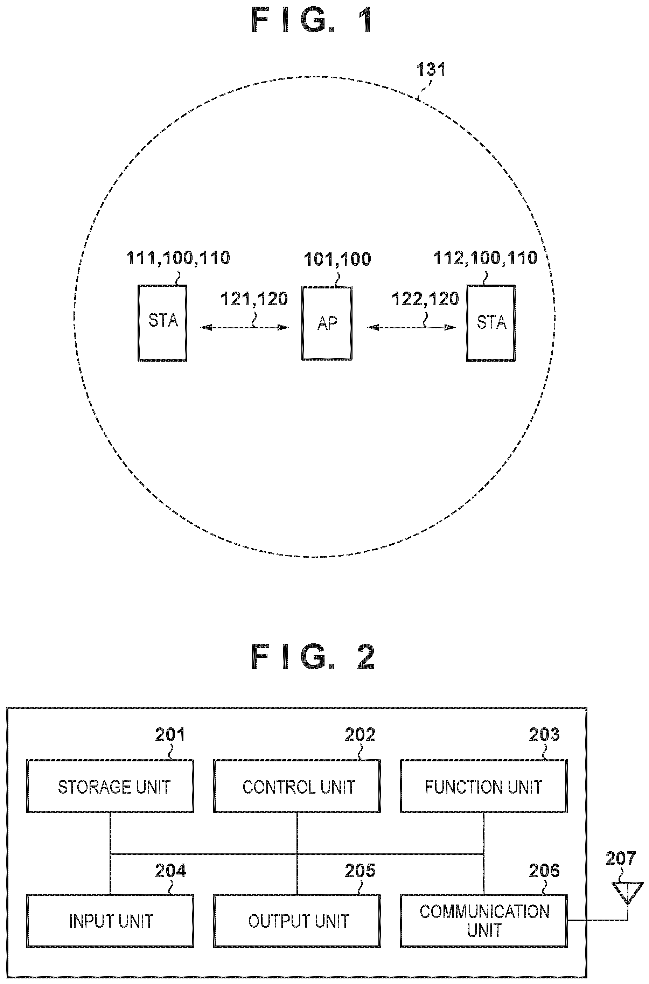

Fig. 1 shows an example of the configuration of a wireless communication system according to this embodiment. This wireless communication system includes, for example, an access point (AP) 101 and stations (STAs) 111 and 112. The AP 101 forms a wireless network 131. The STAs 111 and 112 join the wireless network 131. That is, the wireless network 131 represents a range (communication range) within which the AP 101 can wirelessly communicate with another communication apparatus. In this embodiment, the STAs 111 and 112 are located within the communication range of the AP 101. The STAs 111 and 112 will sometimes be referred to as STAs 110 without discriminating between them hereinafter. The AP 101 and the STAs 110 will sometimes be referred to as communication apparatuses 100 without discriminating between them hereinafter. The AP 101 can include a wireless LAN router and a personal computer (PC) but is not limited to these. Each of the STAs 111 and 112 can include a camera, a tablet, a smartphone, a PC, a portable telephone, a video camera, and a printer but is not limited to these. Note that each of the AP 101 and the STAs 110 may be an information processing apparatus such as a radio chip that can execute wireless communication complying with the IEEE 802.11be standard. The wireless network shown in Fig. 1 is formed by one AP 101 and two STAs 110 but the numbers and arrangements of APs 101 and STAs 110 are not limited to these. For example, one STA 110 or three or more STAs 110 may be connected to the AP 101 and the number of APs 101 may be two or more.

The communication apparatus 100 is a wireless communication apparatus that can execute wireless communication complying with the IEEE 802.11 standard series. The IEEE 802.11 standard series can include the IEEE 802.11 a/b/g/n/ac/ax/be/bn standards. That is, the communication apparatus 100 can support at least one of the standards including the IEEE 802.11be standard. Note that IEEE is an abbreviation for Institute of Electrical and Electronics Engineers. In addition to the IEEE 802.11 standard series, the communication apparatus 100 may support other communication standards such as Bluetooth^{®}, NFC, UWB, ZigBee, and MBOA. Note that UWB is an abbreviation for Ultra Wide Band, and MBOA is an abbreviation for Multi Band OFDM Alliance. Furthermore, NFC is an abbreviation for Near Field Communication. UWB includes wireless USB, wireless 1394, and WiNET. The communication apparatus 100 may support communication standards of wired communication such as a wired LAN.

The communication apparatus 100 can perform communication using frequencies in the 2.4-GHz band, 3.6-GHz band, 5-GHz band, and 6-GHz band, and the 45-GHz band and 60-GHz band called the millimeter wave bands. The frequency bands used by the communication apparatus 100 are not limited to these. For example, a different frequency band like the Sub-1 GHz band can be used. The communication apparatus 100 can perform communication using bandwidths of 20 MHz, 40 MHz, 80 MHz, 160 MHz, 320 MHz, 540 MHz, 640 MHz, 1080 MHz, and 2160 MHz. The bandwidths used by the communication apparatus 100 are not limited to these, and other bandwidths of, for example, 240 MHz and 4 MHz may be used.

The STA 110 establishes a connection to the AP 101 and performs communication. The STA 111 performs communication (first communication) with the AP 101 using a first connection 121 established between the AP 101 and the STA 111. In addition, the STA 112 performs communication (second communication) with the AP 101 using a second connection 122 established between the AP 101 and the STA 112. The STA 111 communicates with the STA 112 via the AP 101. That is, the STA 111 communicates with the STA 112 via the first connection 121 and the second connection 122. Note that the first connection 121 and the second connection 122 will sometimes be referred to as connections 120 without discriminating between them hereinafter. Each of the first communication and the second communication can be performed using single-link communication or multi-link communication. That is, each of the first connection 121 and the second connection 122 can be formed by one or more links. For example, in a case where the AP 101 is an AP MLD and the STA 110 is a Non-AP MLD, a connection between them can be established as a connection between the AP MLD and the Non-AP MLD. On the other hand, a link with each of a plurality of wireless communication interfaces of each MLD can be established. In this way, one connection formed by the plurality of links can be established between the MLDs. In a case where at least one of a pair of communication apparatuses (for example, the AP 101 and the STA 111 or the AP 101 and the STA 112) is not an MLD, a connection between these communication apparatuses is formed by one link (single link). In this case, communication between these communication apparatuses is single-link communication. On the other hand, even if each of the pair of the communication apparatuses is an MLD, only one link may be used between these communication apparatuses. For example, when a plurality of links are established between the MLDs, a single link may be obtained by deleting or disabling some of the links. When a plurality of links are established between the MLDs, a single link may be obtained by associating only one link with a predetermined type of traffic or shifting some links to a DOZE state. Note that a connection of only one link can be established between the MLDs. In this embodiment, communication performed between the MLDs using such connection is also referred to as single-link communication.

In multi-link communication, communication using a plurality of links of different frequencies is performed. One or more links forming the first connection 121 may use frequencies in the same frequency band or at least some of the links may use frequencies in different frequency bands. For example, each of one or more links forming the first connection 121 can use a frequency in a frequency band such as the 2.4-GHz band, 5-GHz band, or 6-GHz band. Similarly, one or more links forming the second connection 122 may use frequencies in the same frequency band or at least some of the links may use frequencies in different frequency bands. Note that the frequencies used by the links may be frequencies belonging to frequency bands other than the above ones.

The multi-link between the AP 101 and the STA 110 can be established in a procedure performed when the STA 110 establishes the connection 120 to the AP 101. For example, the STA 110 can detect the presence of the AP 101 by receiving a Beacon frame periodically transmitted by the AP 101. The Beacon frame transmitted by the AP 101 can include information indicating that the AP 101 can execute multi-link communication. For example, the AP 101 can indicate that the self-apparatus can execute multi-link communication by transmitting the Beacon frame including a predetermined information element. For example, the predetermined information element can be a Multi-Link IE. IE is an abbreviation for Information Element. The Multi-Link IE can be called an ML element. The ML element can include information of each link used by the AP 101 for multi-link communication. For example, the information of each link can be included in a Per-STA Profile subelement corresponding to each link. A method of acquiring the information of each link from the AP 101 by the STA 110 is not limited to reception of the Beacon frame. For example, the STA 110 can transmit a multi-link Probe Request frame including the ML element to the detected AP 101. Using the multi-link Probe Request frame, the STA 110 can request provision of the information of each link used by the AP 101 for multi-link communication. Note that the STA 110 may request provision of the information by designating some of the links used by the AP 101 for multi-link communication. In response to the request of provision of the information from the STA 110, the AP 101 can respond using a multi-link Probe Response frame including the ML element. The AP 101 can provide, in the multi-link Probe Response frame, the information of each link used by the self-apparatus for multi-link communication and the information of the link requested by the STA110. Then, the STA 110 can transmit a multi-link Association Request frame including the ML element to establish the connection 120 to the AP 101. The STA 110 can specify, in the multi-link Association Request frame, a link requested to be used in multi-link communication between the self-apparatus and the AP 101. In response to the received multi-link Association Request frame, the AP 101 can transmit a multi-link Association Response frame including the ML element. The AP 101 can specify, in the multi-link Association Response frame, links to be used for multi-link communication with the STA 110. When the STA 110 receives the multi-link Association Response frame, the connection 120 is established between the AP 101 and the STA 110 and links to be used for multi-link communication between the AP 101 and the STA 110 is specified.

Identification information used to identify each link to be used by the AP 101 to perform multi-link communication is called a Link ID. The wireless communication interface of the AP 101 is associated with each link, and the Link ID can be an identifier for uniquely identifying the wireless communication interface of the AP 101. The Link ID can be an integer value falling within a range of 0 to 14. For example, the AP 101 can perform notification of the Link ID using a Beacon frame or the like by associating the Link ID with the information of each link used by the self-apparatus to perform multi-link communication. The STA 110 can notify the AP of one or more links requested to be used for multi-link communication by transmitting a multi-link Association frame including one or more Link IDs. In this way, the AP 101 can use a common Link ID in multi-link communication performed with each of the plurality of STAs 110. In a case where links of the same Link ID are used in the connection 121 between the AP 101 and the STA 111 and the connection 122 between the AP 101 and the STA 112, the links are formed using the same wireless communication interface of the AP 101. Therefore, communications using these links can be performed at the same frequency. Note that the AP 101 can perform multi-link communication with each of the STAs 111 and 112 using a different link. That is, even if the multi-link is established in each of the connection 121 between the AP 101 and the STA 111 and the connection 122 between the AP 101 and the STA 112, the number of links forming the multi-link may be different. For example, the wireless communication interface of the AP 101 used to form the multi-link in the connection 121 may be different from the wireless communication interface of the AP 101 used to form the multi-link in the connection 122.

Links used for multi-link communication may be used for different application purposes or for the same application purpose. For example, different types of traffic may be associated with the links. All types of traffic may be associated with all the links. As an example, in the IEEE 802.11 standard series, an identifier capable of identifying the type of traffic is assigned to traffic to be communicated. The identifier assigned to each type of traffic is called a Traffic Identifier (TID). The TID is an integer falling within a range of 0 to 7. For example, TID 0 and TID 3 are associated with Best-Effort traffic. TID 1 and TID 2 are associated with Background traffic. TID 4 and TID 5 are associated with Video traffic. TID 6 and TID 7 are associated with Voice traffic. Each TID is assigned with a priority. For example, the priority can be assigned so that the priority of the TID 1 is lowest and the priority is higher in order of TID 2, TID 0, TID 3, TID 4, TID 5, TID 6, and TID 7. Then, the TID can be associated with each link to be used for multi-link communication. For example, according to the IEEE 802.11be standard, as default values, all the TIDs are associated with all the links to be used for multi-link communication between the AP 101 and the STA 110. On the other hand, each TID can be associated with one or more specific links by negotiation between the AP 101 and the STA 110. The link and the TID can be associated with each other by associating the Link ID and the TID with each other. This association can be called TID-To-Link Mapping (TTLM). The AP 101 can perform multi-link communication with each of the STAs 111 and 112 using different TTLM. That is, even if multi-link communication formed by the same links is performed in each of the connections 121 and 122, the type of traffic communicated in each link may be different.

As described above, the individual connections 121 and 122 are established between the AP 101 and the STAs 111 and 112. For example, in each of the connections 121 and 122, which of single-link communication and multi-link communication is used, the number of links forming multi-link communication, frequencies used, a type of traffic to be communicated in each link, and the like can be different. There is not provided a means for grasping the connection state of the connection 122 between the AP 101 and the STA 112 when the STA 111 establishes the connection 121 to the AP 101. Therefore, when the STA 111 communicates with the STA 112 via the AP 101, the performance of overall communication between the STAs 111 and 112 may degrade due to the setting and state of one of the connections. Assume, for example, that single-link communication is used for the first communication between the AP 101 and the STA 111 while multi-link communication is used for the second communication between the AP 101 and the STA 112. In this case, since the communication rate of the first communication has a high probability of being lower than that of the second communication, the communication rate of the overall communication between the STAs 111 and 112 can be limited by the communication rate of the first communication. As an example, in a case where the STA 111 is a PC and the STA 112 is a printer, if it takes time to transmit print data due to a low communication rate of the first communication, the print time becomes long and user experience decreases. Similarly, even if multi-link communication is performed in each of the first communication and the second communication, if the number of links used is different between the first communication and the second communication, the communication rate of the overall communication can be limited by the communication rate of the communication in which the number of links is smaller. When the setting and state are different between the connections 121 and 122, the performance of the overall communication degrades, thereby decreasing user experience.

In consideration of the above situation, according to this embodiment, when communicating with the STA 112 via the AP 101, the STA 111 controls the first communication between the AP and the self-apparatus based on predetermined information concerning the second communication between the AP and the STA 112. For example, based on the predetermined information concerning the second communication, the STA 111 executes control of which of single-link communication or multi-link communication is used to perform the first communication. For example, the STA 111 can execute control to perform the first communication using single-link communication based on the fact that the second communication is performed using single-link communication. Alternatively, the STA 111 can execute control to perform the first communication using multi-link communication based on the fact that the second communication is performed using multi-link communication. With this configuration, it is possible to avoid the occurrence of a difference in communication rate caused when one of the first communication and the second communication is performed using single-link communication and the other is performed using multi-link communication.

Note that the STA 111 may execute control to perform the first communication using single-link communication or multi-link communication based on the fact that the second communication is performed using single-link communication. Alternatively, the STA 111 may perform the first communication using links, the number of which is equal to or larger than the number of links established in the second communication. In these cases, it is possible to avoid the occurrence of a difference in communication rate caused when the number of links used in the first communication is smaller than the number of links used in the second communication. As described above, by controlling the first communication based on the information concerning the second communication, it is possible to make it difficult to cause a difference in communication rate between the first communication and the second communication. Thus, it is possible to avoid the performance of the overall communication from degrading due to a low communication rate of one of the communications. An example of the configuration of each communication apparatus that operates as described above and an example of information exchanged between the communication apparatuses will be described below.

### (Hardware Arrangement of Communication Apparatus)

Fig. 2 shows an example of the hardware arrangement of the communication apparatus 100 (AP 101 and STAs 111 and 112) according to this embodiment. The communication apparatus 100 includes a storage unit 201, a control unit 202, a function unit 203, an input unit 204, an output unit 205, a communication unit 206, and an antenna 207. The storage unit 201 is formed by one or more memories such as a ROM and a RAM, and stores computer programs for performing various operations to be described later, and various kinds of information such as communication parameters for wireless communication. ROM is an abbreviation for Read Only Memory, and RAM is an abbreviation for Random Access Memory. Note that other than the memories such as a ROM and a RAM, a storage medium such as a flexible disk, a hard disk, an optical disk, a magnetooptical disk, a CD-ROM, a CD-R, a magnetic tape, a nonvolatile memory card, or a DVD may be used as the storage unit 201. The storage unit 201 may include a plurality of memories.

The control unit 202 is formed by, for example, one or more processors such as a CPU and an MPU, and controls the whole communication apparatus 100 by executing the computer programs stored in the storage unit 201. Note that the control unit 202 may control the whole communication apparatus 100 by cooperation of the computer programs stored in the storage unit 201 and an Operating System (OS). In addition, the control unit 202 generates data and signals (radio frames) to be transmitted in communication with another communication apparatus. Note that CPU is an abbreviation for Central Processing Unit and MPU is an abbreviation for Micro Processing Unit. In addition, the control unit 202 may include a plurality of processors such as a multi-core processor, and controls the whole communication apparatus 100 by the plurality of processors.

In addition, the control unit 202 controls the function unit 203 to execute wireless communication and predetermined processing such as image capturing, printing, or projection. The function unit 203 is hardware used by the communication apparatus 100 to execute predetermined processing. If the function unit 203 is a printer, image data acquired via the communication unit 206 is printed. If the function unit is a scanner, image data generated by scanning by the scanner is transmitted to an external apparatus via the communication unit 206. If the function unit is a camera, image data captured by the camera is transmitted to an external apparatus via the communication unit 206.

The input unit 204 accepts various kinds of operations from the user. The input unit 204 is formed by, for example, a touch panel, hardware keys, a keyboard, a mouse, buttons, and the like. The output unit 205 performs various kinds of outputs to the user via a monitor screen, a loudspeaker, an LED, or the like. In this example, the output by the output unit 205 includes display on the monitor screen, audio output by the loudspeaker, and vibration output. Note that both the input unit 204 and the output unit 205 may be implemented by one module, like a touch panel. Furthermore, each of the input unit 204 and the output unit 205 may be integrated with the communication apparatus 100, or may be a separate body.

The communication unit 206 controls wireless communication complying with the IEEE 802.11be standard. The communication unit 206 can include a plurality of wireless communication interfaces for performing multi-link communication. Each wireless communication interface forms a link with a partner communication apparatus. In addition to the IEEE 802.11be standard, the communication unit 206 may control wireless communication complying with another IEEE 802.11 standard series or control wired communication by a wired LAN or the like. The communication unit 206 controls the antenna 207 to transmit/receive signals for wireless communication generated by the control unit 202. Note that if the communication apparatus 100 supports the NFC standard or Bluetooth standard in addition to the IEEE 802.11 standard series, it may control wireless communication complying with these communication standards. If the communication apparatus 100 can execute wireless communication complying with a plurality of communication standards, it may individually include the communication units 206 and the antennas 207 supporting the respective communication standards. The communication apparatus 100 communicates data such as image data, document data, or video data with the partner communication apparatus via the communication unit 206. Note that the antenna 207 may be formed separately from the communication unit 206 or may be formed as one module combined with the communication unit 206.

The antenna 207 is an antenna configured to allow communication in the 2.4-GHz band, the 5-GHz band, the 6-GHz band, and the like. Fig. 2 shows an example in which the communication apparatus 100 includes one antenna but the communication apparatus 100 may include two or more antennas. Alternatively, the communication apparatus 100 may include different antennas for the respective frequency bands. If the communication apparatus 100 includes a plurality of antennas, it may include the communication units 206 respectively corresponding to the antennas.

### (Functional Arrangement of Communication Apparatus)

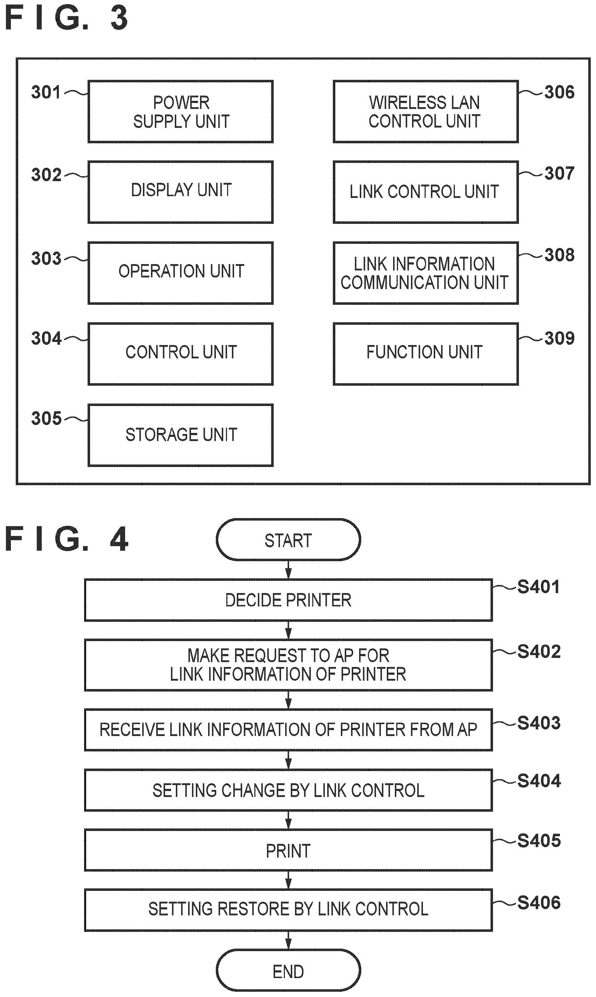

Fig. 3 is a block diagram showing the functional arrangement of the communication apparatus 100 (AP 101 and STAs 111 and 112) according to this embodiment. This functional arrangement can be implemented when, for example, one or more processors of the control unit 202 execute the programs stored in one or more memories of the storage unit 201. The communication apparatus 100 may include processing units other than components shown in Fig. 3. In the following description, in a case where the operation of the processing unit is different among the AP 101 and the STAs 110 (STAs 111 and 112), the processing unit will be described for each communication apparatus. The remaining processing units can commonly operate. The communication apparatus 100 can include a power supply unit 301, a display unit 302, an operation unit 303, a control unit 304, a storage unit 305, a wireless LAN control unit 306, a link control unit 307, a link information communication unit 308, and a function unit 309.

The power supply unit 301 supplies power to each processing unit. For example, the power supply unit 301 obtains power from an AC power supply or a battery of the communication apparatus 100, and supplies power to each processing unit. The display unit 302 functions as a user interface to perform various kinds of display. The display unit 302 performs display using the liquid crystal panel of the output unit 205, an LED, or the like. The operation unit 303 functions as a user interface to accept various kinds of operations. For example, the operation unit 303 accepts various kinds of operations input using the keyboard, mouse, touch panel, buttons, and the like of the input unit 204. Note that the display unit 302 and the operation unit 303 can also operate as interfaces with the upper layer in the communication apparatus 100. That is, the display unit 302 can perform output to an application of the upper layer, and the operation unit 303 can accept input from the application of the upper layer. The control unit 304 controls the whole communication apparatus 100 by executing the programs stored in the storage unit 201. The storage unit 305 stores programs for performing various processes to be described later and various kinds of information.

The wireless LAN control unit 306 performs wireless LAN control complying with the IEEE 802.11 standard series and Wi-Fi standard, and transmission/reception of a radio wave. For example, the wireless LAN control unit 306 performs communication using one of single-link communication and multi-link communication based on the control of the link control unit 307. In a case where the wireless LAN control unit 306 performs multi-link communication, it performs communication using TTLM or links set by the link control unit 307. By using the communication unit 206 and the antenna 207, the wireless LAN control unit 306 in the AP 101 communicates with the STA connected to the self-apparatus as an access point in the infrastructure mode in the IEEE 802.11 standard. The wireless LAN control unit 306 in the STA 110 serves as a terminal station (STA) in the infrastructure mode in the IEEE 802.11 standard to communicate with another STA via the AP using the communication unit 206 and the antenna 207.

The link control unit 307 performs link control between the communication apparatus 100 and the partner communication apparatus. The link control unit 307 of the AP 101 establishes a connection to the STA 110, and sets links in the connection in accordance with a request from the STA 110. For example, switching between single-link communication and multi-link communication, setting of links to be used for multi-link communication, association (TTLM) of each link with the type (TID) of traffic, and the like can be executed. The link control unit 307 of the STA 111 establishes a connection to the AP 101, and performs link control in the connection between the AP 101 and the STA 111 based on the connection between the AP 101 and the STA 112. For example, switching between single-link communication and multi-link communication, setting of links to be used for multi-link communication, request to the AP 101 such as TTLM, and the like can be executed. The link control unit 307 of the STA 112 establishes a connection to the AP 101, and performs link control in the connection.

The link information communication unit 308 exchanges information concerning the connection between the AP 101 and the STA 110 with another communication apparatus. The link information communication unit 308 of the STA 111 requests information concerning the connection between the AP 101 and the STA 112 from the AP 101 or the STA 112. For example, in this connection, information capable of specifying which of single-link communication and multi-link communication is performed, information capable of specifying the number of established links, information capable of specifying association (TTLM) of each link with the type of traffic, and the like can be requested. The link information communication unit 308 in each of the AP 101 and the STA 112 provides information concerning the connection between the AP 101 and the STA 112 in accordance with the request from the STA 111.

The function unit 309 executes a function unique to each communication apparatus 100. For example, if the STA 111 is a PC, the function unit 309 of the STA 111 can execute a function related to a print instruction. The function related to the print instruction includes, for example, confirmation of the status of the printer, and generation of a job (print job) for printing by the printer. If the STA 112 is a printer, the function unit 309 of the STA 112 can execute a function related to execution of printing. The function related to execution of printing includes, for example, acceptance of a print job, and print processing for a print medium such as a sheet. For the print processing, a printer head and a driving device for it, which are included in the function unit 203 to print image data, ink, and the like can be used. The function unit 309 of the AP 101 can execute management of the LAN and the like.

### (Procedure of Processing)

The above-described operation procedure by the STA 111, the sequence between the AP 101 and the STAs 111 and 112, and the like will be described using some processing examples.

### (Procedure of Processing in STA 111)

First, an example of an operation when the STA 111 communicates with the STA 112 via the AP 101 will be described. Fig. 4 shows an example of an operation procedure executed by the STA 111. In this example, the STA 111 is a PC and the STA 112 is a printer. Note that the STA 111 will sometimes be referred to as the PC 111 hereinafter, and the STA 112 will sometimes be referred to as the printer 112 hereinafter. Assume that the connection 121 between the AP 101 and the STA 111 and the connection 122 between the AP 101 and the STA 112 have already been established. This example assumes that the user inputs a print instruction of document data, image data, or the like to the PC 111 and a print job is generated. In a case where the printer 112 is registered as the output destination of the print job in the self-apparatus, the PC 111 starts to communicate with the printer 112 based on the generation of the print job. For example, the PC 111 decides the printer 112 as a printer that is caused to execute the print job, by executing communication corresponding to IPP with the printer 112 (step S401). IPP is an abbreviation for Internet Printing Protocol. Note that this example will describe an example in which print data is communicated between the PC 111 and the printer 112, but the communication apparatus operating as the STA and the communicated data are not limited to them, and the operation of this example is applicable to various kinds of communication apparatuses and various communication data.

When the PC 111 starts to communicate with the printer 112 via the AP 101, the PC 111 acquires information concerning communication between the AP 101 and the printer 112 from the AP 101. For example, the PC 111 requests information concerning the connection 122 from the AP 101 (step S402), and acquires it (step S403). This information can be called link information. The request and acquisition of the link information can be performed using an Action frame in the link information communication unit 308 of each of the PC 111 and the AP 101. The structure of the Action frame will be described later. The link information of the connection 122 can be, for example, information capable of specifying which of single-link communication and multi-link communication is performed in the connection 122. If multi-link communication is performed in the connection 122, the link information may be information capable of specifying the number of links forming the multi-link, and information (for example, TTLM) capable of specifying association of each link with the type of traffic.

The PC 111 executes control of the connection 121 between the self-apparatus and the AP 101 based on the link information of the connection 122 acquired from the AP 101 (step S404). For example, the PC 111 controls which of single-link communication and multi-link communication is used in the connection 121. For example, the PC 111 can control to use single-link communication in the connection 121 based on the fact that single-link communication is performed in the connection 122. Alternatively, the PC 111 can control to use multi-link communication in the connection 121 based on the fact that multi-link communication is performed in the connection 122. Note that the PC 111 may control to use multi-link communication in the connection 121 based on the fact that single-link communication is performed in the connection 122. The PC 111 can control the number of links used in the multi-link of the connection 121 based on the link information of the connection 122. For example, based on the number of links used in the connection 122, the PC 111 can control to perform multi-link communication in the connection 121 using links the number of which is equal to or larger than the number of links. For example, based on acquisition of the link information indicating that multi-link communication using two links is performed in the connection 122, the PC 111 can control to perform multi-link communication using two or more links in the connection 121. Thus, since multi-link communication is performed in the connection 121 using links the number of which is equal to or larger than the number of links used in the connection 122, the possibility that the communication rate of the connection 121 is lower than that of the connection 122 can be reduced. Note that in a case where links the number of which is equal to or larger than the number of links used in the connection 122 can be used in the connection 121, the PC 111 may perform multi-link communication using links the number of which is equal to or larger than the number of links used in the connection 122.

The PC 111 transmits print data including the print job using the connection 121 (step S405). The print data is transmitted to the printer 112 via the AP 101. IPP can be used for communication of the print data. Upon completion of printing, the PC 111 ends the processing. Note that if the PC 111 starts communication using multi-link communication based on the link information of the connection 122, the PC 111 may end the use of the multi-link communication based on the end of the communication. For example, the PC 111 can change the communication method used in the connection 121 from multi-link communication to single-link communication based on the end of the communication of the print data. By changing the communication method to single-link communication, the PC 111 can reduce power consumption, as compared with the case of multi-link communication. For example, the PC 111 performs multi-link communication if it is desirable to perform high-speed communication with the partner communication apparatus, and performs single-link communication otherwise, thereby making it possible to reduce power consumption, and perform high-speed communication, as needed. Note that if the PC 111 starts communication using single-link communication based on the link information of the connection 122, the PC 111 may end the use of the single-link communication based on the end of the communication. For example, the PC 111 can change the communication used in the connection 121 from single-link communication to multi-link communication based on the end of the communication of the print data. Note that the PC 111 can change the number of links used for multi-link communication in the connection 121 to the number of links used before the communication with the printer 112 based on the end of the communication with the printer 112.

Switching from single-link communication to multi-link communication in the connection 121 can be executed by, for example, adding a new link to the connection established by the single link. In this case, the PC 111 can request to add a link by transmitting a Link Reconfiguration Request frame to the AP 101. The Link Reconfiguration Request frame can include a Reconfiguration Multi-Link element including a Per-STA Profile subelement including information for specifying a link requested to be added. The information for specifying the link requested to be added can be a Link ID. Furthermore, the PC 111 can perform single-link communication by enabling only one link and disabling the remaining links in the connection 121 established by the multi-link. In this case, the PC 111 can execute switching to multi-link communication by enabling the disabled links. Furthermore, the PC 111 can perform single-link communication by setting one link of the multi-link in the AWAKE state and setting the remaining links in the DOZE state. In this case, the PC 111 can execute switching to multi-link communication by shifting the links in the DOZE state to the AWAKE state. The PC 111 can perform single-link communication by associating a predetermined type of traffic with only one link in TTLM and not associating the predetermined type of traffic with the remaining links. In this case, the PC 111 can execute switching to multi-link communication by changing the TTLM to associate at least one of the remaining links with the predetermined type of traffic. Note that if the connection 121 is established by the single link, the PC 111 may switch to multi-link communication by reestablishing the connection using a multi-link setup. In this case, the PC 111 can establish the connection 121 by transmitting a Reassociation Request frame including an ML element including a plurality of Link IDs to the AP 101.

Switching from multi-link communication to single-link communication in the connection 121 can be executed by, for example, deleting some links from the connection established by the multi-link. In this case, the PC 111 can request to delete links by transmitting a Link Reconfiguration Request frame to the AP 101. The Link Reconfiguration Request frame can include a Reconfiguration Multi-Link element including a Per-STA Profile subelement including information for specifying a link requested to be deleted. The information for specifying a link requested to be deleted can be a Link ID. Furthermore, the PC 111 can execute switching to single-link communication by keeping one link in the connection 121 established by the multi-link and disabling the remaining links. Furthermore, if the plurality of links are in the AWAKE state in the connection 121, the PC 111 can execute switching to single-link communication by keeping one link in the AWAKE state and setting the remaining links in the DOZE state. Alternatively, if the predetermined type of traffic is associated with a plurality of links in the TTLM in the connection 121, the PC 111 can execute switching to single-link communication by making a change to associate the predetermined type of traffic with only one link. Note that if the PC 111 establishes the connection 121 by the multi-link, the PC 111 may perform switching to single-link communication by reestablishing the connection by the single link. In this case, the PC 111 can establish the connection 121 by transmitting a Reassociation Request frame to the AP 101 without using a multi-link Reassociation Request frame.

The number of links used for multi-link communication in the connection 121 can be changed by, for example, adding a new link or deleting an established link. In this case, the PC 111 can request to add or delete a link by transmitting a Link Reconfiguration Request frame to the AP 101. The PC 111 can change the setting of each link to change the number of links used for multi-link communication in the connection 121. For example, the PC 111 can enable a disabled link to increase the number of links used. To increase the number of links used, the PC 111 may change a link in the DOZE state to the AWAKE state. On the other hand, the PC 111 can disable an enabled link to decrease the number of links used. To decrease the number of links used, the PC 111 can change a link in the AWAKE state to the DOZE state. The PC 111 can change the number of links used by changing the number of links associated with the predetermined type of traffic in the TTLM. To change the number of links used for multi-link communication in the connection 121, the PC 111 can perform reconnection to the AP 101.

### (Operation of Link Control in STA 111)

An example of the operation of link control of the connection 121 executed when the STA 111 acquires the link information of the connection 122 will be described. In this example, an example of controlling, based on the link information of the connection 122 acquired by the STA 111 from the AP 101, which of single-link communication and multi-link communication is used to perform communication will be described. For example, the operation in this example can be executed in steps S402 to S404 of Fig. 4.

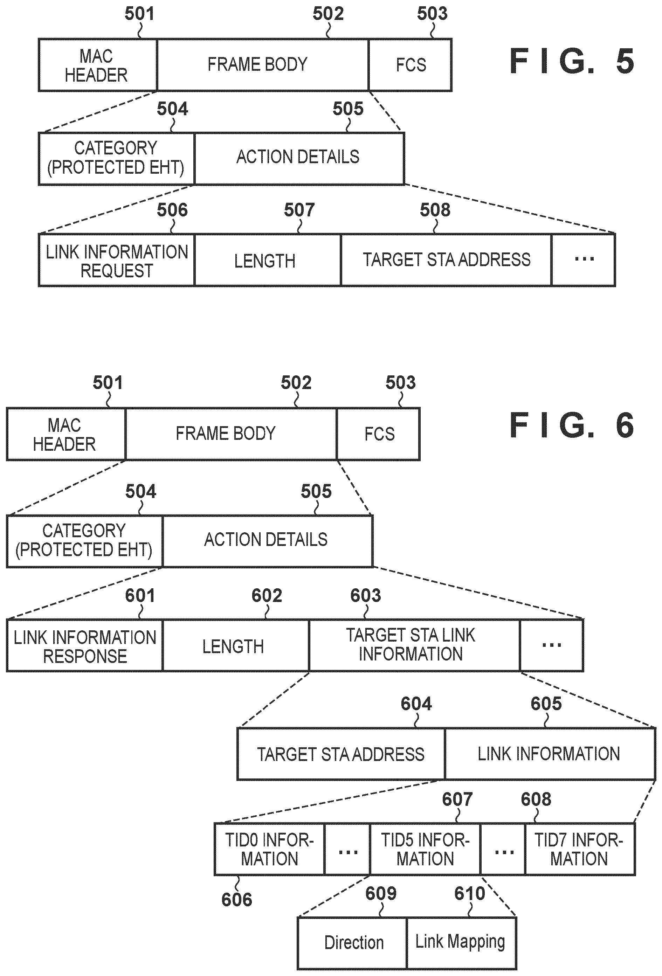

Fig. 5 shows an example of the format of the frame used by the STA 111 to request the link information of the connection 122 from the AP 101. This frame can be used in step S402 of Fig. 4. The frame format shown in Fig. 5 indicates an example of using an Action frame defined in the IEEE 802.11 standard series, but another frame may be used to request the link information. The Action frame includes a MAC header field 501, a frame body field 502, and an FCS field 503. FCS is an abbreviation for Frame Check Sequence. The frame body in the Action frame can be called an action frame body. The action frame body field 502 can include a category field 504 and an Action Details field 505. The category field 504 is a field indicating the type of the Action frame. If a value of 37 is set in the category field 504, this indicates that this Action frame is a Protected EHT Action frame. The Protected EHT Action frame is one of Action frames defined in the IEEE 802.11be standard. The Action Details field 505 is a field whose contents change depending on the value in the category field 504. For example, the Action Details field 505 can include a link information request field 506, a length field 507, and a target STA address field 508. The Action Details field 505 can include other information.

The link information request field 506 indicates that this Protected EHT Action frame is an Action frame of the link information request. The length field 507 indicates the length of a subsequent field in this frame. The target STA address field 508 includes information for identifying the STA forming the connection corresponding to the link information to be acquired by this request. For example, the information for identifying the STA can be a MAC address. For example, if the STA 111 requests the link information of the connection 122, the MAC address of the STA 112 is set. Note that in a status in which the plurality of STAs are connected to the AP, if the link information of the connection between the AP and each of the plurality of STAs is requested, a plurality of link information request fields 506 can be included in the Protected EHT Action frame. In this case, in each link information request field 506, the MAC address of each STA forming the connection for which the link information is to be acquired can be designated.

Fig. 6 shows an example of the format of the frame used by the AP 101 to provide the link information of the connection 122 to the STA 111. This frame can be used in step S403 of Fig. 4. The frame format shown in Fig. 6 indicates an example of using an Action frame defined in the IEEE 802.11 standard series, but another frame may be used to provide the link information. In Fig. 6, the same reference numerals as in Fig. 5 denote the same components and a description thereof will be omitted. That is, the fields from the MAC header field 501 to the category field 504 can be formed as in Fig. 5. The Action Details field 505 can include a link information response field 601, a length field 602, and a target STA link information field 603. The link information response field 601 indicates that this Protected EHT Action frame is the Action frame of a link information response. The length field 602 indicates the length of a subsequent field in this frame.

The target STA link information field 603 can include a target STA address field 604 and a link information field 605. The target STA address field 604 indicates information for identifying the STA forming the connection corresponding to the link information provided by the subsequent link information field 605. The information for identifying the STA is, for example, a MAC address. If, for example, the STA 111 requests the link information of the connection 122, the target STA address in the link information response field 601 for responding to this request indicates the MAC address of the STA 112. The link information field 605 indicates the link information of the connection provided by this link information response. For example, the link information field 605 can include information indicating which of single-link communication and multi-link communication is performed in the target connection. The link information field 605 can include information indicating the number of links established in the target connection. Information provided as the link information may be information other than the above information. Fig. 6 shows an example in which the TTLM of the target connection is provided as the link information. That is, the link information field 605 can include fields from a TID 0 information field 606 to a TID 7 information field 608. The TID 0 information field 606 is information indicating a link associated with TID 0. The TID 7 information field 608 is information indicating a link associated with TID 7. As described above, the link information field 605 can include eight pieces of TID information corresponding to TID 0 to TID 7, respectively. Each piece of TID information can include a Direction field 609 and a Link Mapping field 610. The Direction field 609 indicates which of Downlink communication and Uplink communication is associated with the subsequent Link Mapping field 610. For example, the Direction field 609 can be set with a value indicating one of Downlink (the direction from the AP to the STA), Uplink (the direction from the STA to the AP), and Both (both the direction from the AP to the STA and the direction from the STA to the AP). The Link Mapping field 610 indicates a link in which traffic of each TID is communicated. That is, the Link Mapping field 610 can indicate the TTLM of the target connection. The Link Mapping field 610 can indicate the TTLM by, for example, a bitmap representation. In this case, each of bits forming the Link Mapping field 610 indicates whether each link is associated with the TID. For example, in the Link Mapping field 610, each bit of 2 octets can be associated with each of links 0 to 14. Each bit is set with a value of 1 in a case where the link is used for communication of traffic of the TID, and set with a value of 0 in a case where the link is not used for communication of traffic of the TID. A method of indicating the TTLM in the Link Mapping field 610 may be other than the bitmap.

Note that as described above, information capable of specifying which of single-link communication and multi-link communication is used in the connection 122 can be provided as the link information. With this structure, it is possible to largely reduce an information amount necessary to indicate the link information, as compared with a case where the TTLM is provided. The number of links established in the connection 122 or the number of links used can be provided as the link information. With this structure, it is possible to reduce an information amount necessary to indicate the link information, as compared with a case where the TTLM is provided, and it is possible to specify the number of links to be used in the multi-link in the STA 111. For example, the STA 111 can control to perform multi-link communication in the connection 121 using links the number of which is equal to or larger than the number of links used in the connection 122.

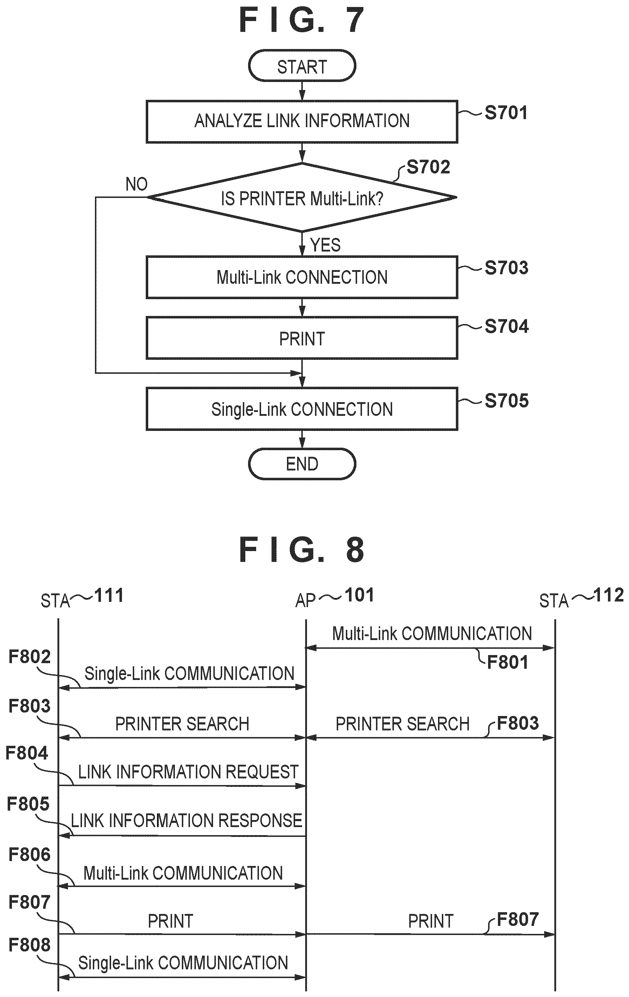

Fig. 7 shows an example of the operation procedure of link control of the connection 121 in the STA 111. This operation procedure can be executed in step S404 of Fig. 4. That is, this operation procedure can be executed when, for example, the STA 111 receives the Action frame including the Link Mapping field 610 from the AP 101. First, the STA 111 analyzes the link information of the connection 122 acquired from the AP 101 (step S701). For example, the acquired link information acquired by the STA 111 is information indicating which of single-link communication and multi-link communication is used to perform communication in the connection 122. In this case, by using this information, the STA 111 determines which of single-link communication and multi-link communication is used to perform communication in the connection 122. Note that analysis of the link information by the STA 111 can be different in accordance with subsequent processing. For example, when deciding, in the subsequent processing, which of single-link communication and multi-link communication is used in the connection 121, the STA 111 determines which of single-link communication and multi-link communication is performed in the connection 122. In this case, the link information may be information indicating which of single-link communication and multi-link communication is performed in the connection 122 or may be the TTLM. For example, based on the fact that a plurality of bits corresponding to different links in the TTLM are set to 1, the STA 111 can determine that multi-link communication is performed. On the other hand, when deciding the number of links used in the connection 121 in the subsequent processing, the STA 111 can determine the number of links used in the connection 122 by specifying the number of different links corresponding to the bits set with 1 in the TTLM. The STA 111 may acquire, as the link information of the connection 122, information indicating the number of links used.

The STA 111 may execute analysis with respect to the TID of traffic used to communicate with the STA 112. For example, even if multi-link communication is performed in the connection 122, the TID of traffic used by the STA 111 to communicate with the STA 112 may be associated with only one link. In this case, the STA 111 can consider that single-link communication is used to perform communication in the connection 122. For example, if the acquired link information is the TTLM, the STA 111 determines, by using the TTLM included in the Link Mapping field 610, a link associated with the TID of traffic used by the self-apparatus to communicate with the STA 112. For example, the STA 111 communicates print data with the STA 112, and traffic of the print data is associated with TID 5. In this case, the STA 111 determines that the link corresponding to the bit set with a value of 1 in the Link Mapping field 610 corresponding to TID 5 is a link used for communication of the traffic. Then, if only one of the bits corresponding to TID 5 is set to 1, the STA 111 can determine that single-link communication is used to perform communication in the connection 122. If a plurality of bits of the bits corresponding to the TID are set to 1, the STA 111 can determine that multi-link communication is used to perform communication in the connection 122. Similarly, the STA 111 can decide the number of links used in the connection 121 based on the number of links used in the connection 122 with respect to the TID of traffic used for communication with the STA 112. In the above case, the STA 111 can determine, as the number of links used in the connection 122, the number of bits set with a value of 1 among the bits corresponding to TID 5 in the acquired TTLM of the connection 122.

The STA 111 determines the state of communication of the connection 122 based on the analysis result (step S702). For example, the STA 111 determines which of single-link communication and multi-link communication is performed in the connection 122 (step S702). If it is determined that multi-link communication is performed in the connection 122 (YES in step S702), the STA 111 can change to perform multi-link communication in the connection 121. For example, the STA 111 requests the AP 101 to add a link to be used. On the other hand, if it is determined that single-link communication is performed in the connection 122 (NO in step S702), the STA 111 maintains the setting of the connection 121 to continue communication. Then, the STA 111 executes communication with the STA 112 (step S704). For example, the STA 111 transmits print data to the STA 112 to execute the print job. Upon completion of communication with the STA 112, the STA 111 may return the connection 121 to the state before execution of the control for performing multi-link communication (step S705). For example, the STA 111 can request that the AP 101 delete a link that is used.

### (Example of Sequence Between AP 101 and STA 110)

An example of a sequence of frame exchange executed between the AP 101 and each STA 110 in a case where the STA 111 operates, as described above, will be described.

Fig. 8 shows an example of a sequence of frame exchange executed between the AP 101 and each STA 110. This example assumes that the second communication is performed between the AP 101 and the STA 112 using multi-link communication (F801). Assume also that the first communication is performed between the AP 101 and the STA 111 using single-link communication (F802). The STA 111 starts communication with the STA 112 based on input from the user or the like. For example, the STA 111 executes a search for a printer in accordance with IPP based on the input of an instruction to start print processing (F803). The search for a printer can be executed using the connections 121 and 122 established between the AP 101 and the STAs 111 and 112. Assume that the STA 111 decides the STA 112 as the transmission destination of the print job based on a response from the STA 112.

The STA 111 requests the link information of the connection 122 from the AP 101 (F804). For example, the STA 111 can request the link information of the connection 122 between the AP 101 and the STA 112 by designating the STA 112 to request the link information. Upon receiving the request of the link information from the STA 111 (F804), the AP 101 transmits a link information response that provides the link information of the connection 122 (F805). For example, the AP 101 provides the link information of the connection 122 by returning the response including information indicating TTML. The STA 111 executes link control based on the acquired link information of the connection 122. For example, the STA 111 can request the AP 101 to switch to multi-link communication based on determination that multi-link communication is performed in the connection 122 (F806). For example, the STA 111 can notify the AP 101 of a frame that requests to add a new link, enable a disabled link, or shift a link in the DOZE state to the AWAKE state. The AP 101 changes the setting of the connection 121 in accordance with the request from the STA 111. For example, the AP 101 notifies the STA 111 of a frame to add a new link, enable a disabled link, or shift a link in the DOZE state to the AWAKE state in the connection 121. This can use multi-link communication in the connection 121.

The STA 111 communicates with the AP 101 using multi-link communication, and transmits print data to the STA 112 (F807). The STA 112 executes a print job based on the received print data. The STA 111 ends multi-link communication in the connection 121 based on completion of communication with the STA 112 (F808). For example, the STA 111 requests the AP 101 to switch the connection 121 to single-link communication. For example, the STA 111 can notify the AP 101 of a frame that requests to delete the added link, disable the enabled link, or shift, to the DOZE state, the link shifted to the AWAKE state. The AP 101 changes the setting of the connection 121 in accordance with the request from the STA 111. For example, the AP 101 notifies the STA 111 of a frame to delete the added link, disable the enabled link, or shift, to the DOZE state, the link shifted to the AWAKE state in the connection 121. This ends multi-link communication in the connection 121.

### (Modification 1)

An example in which the STA 111 acquires the link information of the connection 122 from the AP 101 has been described above. In order for the STA 111 to acquire the link information of the connection 122 from the AP 101, both the AP 101 and the STA 111 need to have capability of exchanging the link information. For example, the AP 101 and the STA 111 need to be able to perform communication using the frames shown in Figs. 5 and 6. Therefore, for example, if the AP 101 does not have the capability, the STA 111 cannot execute the above-described link control. In this example, an example in which the STA 111 acquires the link information of the connection 122 from the STA 112 will be described. Thus, even if the AP 101 has no capability of providing the link information of the connection 122 to the STA 111, the STA 111 can execute link control of the connection 121 based on the link information of the connection 122 by acquiring the information from the STA 112. This example is different from the above example in terms of the operation of the STA 111 to acquire the link information of the connection 122. Therefore, the procedure of the operation in the STA 111 will be described first, and then an example of the format of a frame used by the STA 111 to acquire the link information from the STA 112 will be described. The remaining operations can be executed as described above.

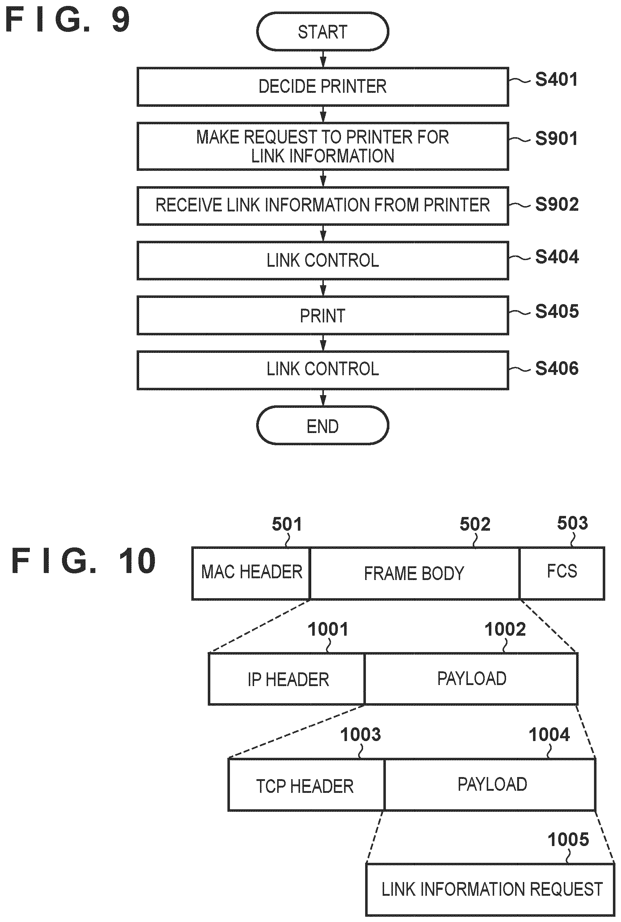

Fig. 9 shows an example of the operation procedure executed in the STA 111. The same reference symbols as in Fig. 4 denote the same operations and a description thereof will be omitted. That is, in Fig. 9, the PC 111 decides the printer 112 as a printer that is caused to execute the print job (step S401). After the start of communication with the printer 112, the PC 111 acquires link information concerning the connection 122 from the printer 112. That is, the PC 111 requests the link information of the connection 122 from the printer 112 (step S901), and acquires the link information of the connection 122 from the printer 112 (step S902). Then, the PC 111 performs link control of the connection 121, communication to execute the print job, and the like based on the acquired link information (steps S404 to S406).

Fig. 10 shows an example of the format of a frame used by the STA 111 to request the link information of the connection 122 from the STA 112. This frame can be used in step S901 of Fig. 9. The frame format shown in Fig. 10 indicates an example of using a data frame defined in the IEEE 802.11 standard series, but another frame may be used to request the link information. In Fig. 10, the same reference numerals as in Fig. 5 denote the same components and a description thereof will be omitted. That is, the data frame includes the MAC header field 501, the frame body field 502, and the FCS field 503, similar to the Action frame shown in Fig. 5. Note that the frame body field in the data frame can be called a data frame body field. The data frame body field 502 can include an IP header field 1001 and a payload field 1002. The IP header field includes the IP address of the communication apparatus as a destination, and the IP address of the communication apparatus as a transmission source. The payload field 1002 can include a TCP header field 1003 and a payload field 1004. The TCP header field 1003 includes a transmission destination port number, a destination port number, and a sequence number. The payload field 1004 can include a link information request field 1005. The link information request field 1005 indicates that this TCP packet is a request of the link information. For example, the link information request field 1005 can be transferred to an upper layer (application layer or the like) of the printer 112, and processed in the upper layer. For example, in the upper layer of the printer 112, the link information of the connection 122 can be acquired from the link control unit 307 of the self-apparatus based on the request from the PC 111. Note that the link information request field 1005 can include information for specifying the transmission source.

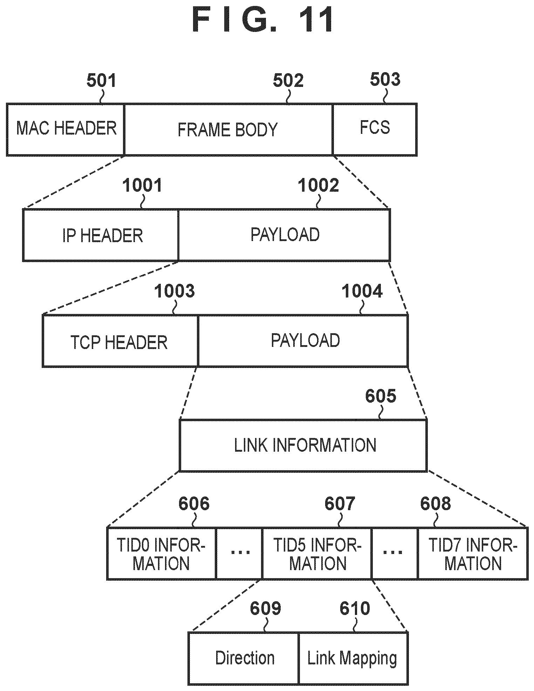

Fig. 11 shows an example of the format of a frame used by the STA 112 to provide the link information of the connection 122 to the STA 111. This frame can be used in step S902 of Fig. 9. The frame format shown in Fig. 11 indicates an example of using a data frame defined in the IEEE 802.11 standard but another frame may be used to provide the link information. In Fig. 11, the same reference numerals as in Figs. 5, 6, and 10 denote the same components and a description thereof will be omitted. That is, the fields from the MAC header field 501 to the FCS field 503 can be formed, similar to Fig. 5. The data frame body field 502 can be formed, similar to Fig. 10. The payload field 1004 can include the link information field 605. The link information field 605 can include information capable of specifying the TTLM of the connection 122, similar to Fig. 6. That is, in the upper layer of the printer 112, the payload of the TCP packet can be generated using the link information of the connection 122 acquired from the link control unit 307 of the self-apparatus, and transmitted as a data frame to the PC 111. For example, this processing can be executed using the link information communication unit 308 of the printer 112. The link information field 605 can include information indicating that this TCP packet is a link information response. Furthermore, the link information field 605 can include information capable of specifying the communication apparatus as the destination of the TCP packet or the communication apparatus as the transmission source of the TCP packet. Note that if the link information request field 1005 received by the printer 112 includes information (for example, Dialog information) capable of specifying a series of communications, the link information field 605 can include the same Dialog information. This allows the PC 111 to specify a response to the link information request transmitted by the self-apparatus.

### (Modification 2)

An example in which the STA 111 controls, based on the link information of the connection 122, which of single-link communication and multi-link communication is used for communication in the connection 121 and an example in which the STA 111 controls, based on the link information of the connection 122, the number of links used in multi-link communication have been described above. In this example, an example in which in a case where multi-link communication is performed in each of the connections 121 and 122, the STA 111 controls the TTLM of the connection 121 based on the link information of the connection 122 will be described. For example, even if multi-link communication is performed using the same number of links in each of the connections 121 and 122, if a frequency or a frequency band used in each link is different, a difference in communication rate between the connections may become large. Therefore, by using the same frequency or frequency band in each link, it is possible to avoid a difference in communication rate between the connections from becoming large. For example, the STA 111 can specify a link associated with a predetermined TID by acquiring the TTLM of the connection 122. When the link associated with the predetermined TID is specified, the STA 111 can specify a frequency or a frequency band used in the link. For example, the STA 111 specifies the TTLM of the connection 122 using the acquired link information of the connection 122. If there is a difference between the TTLM of the connection 121 and the TTLM of the connection 122, the STA 111 changes the TTLM of the connection 121. This allows the STA 111 to further decrease the difference in communication rate between the connections 121 and 122 in communication with the STA 112. This example is different from the above example in terms of the operation after the STA 111 acquires the link information of the connection 122. Therefore, an example of the operation of link control in the STA 111 after acquiring the link information of the connection 122 will be described. The remaining operations can be executed as described above.

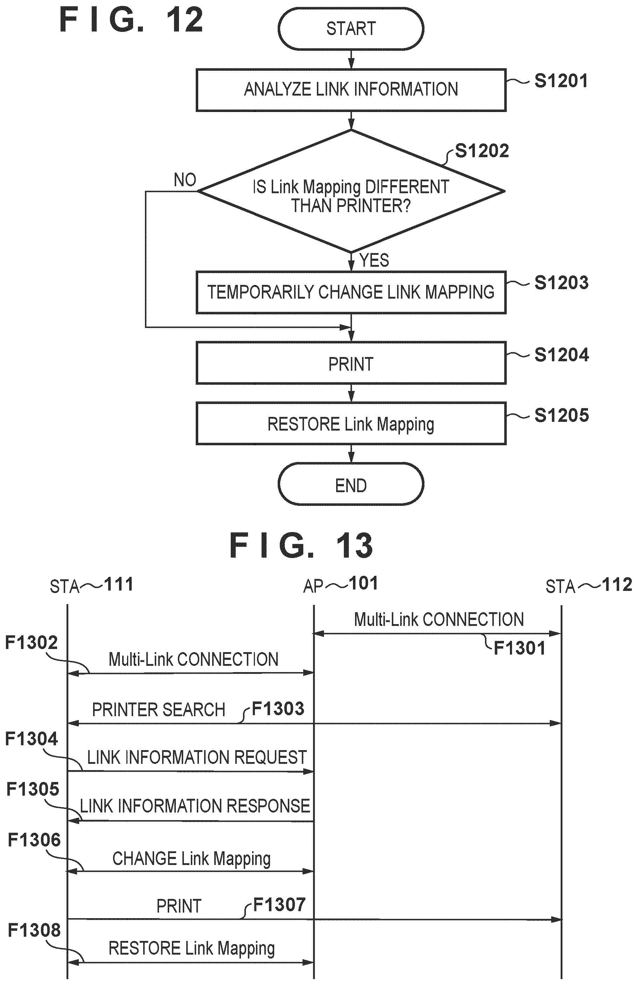

Fig. 12 shows an example of the operation procedure of link control in the STA 111. This operation procedure can be executed in step S404 of Fig. 4 or 9. That is, this operation procedure can be executed when, for example, the STA 111 receives the TTLM as the link information of the connection 122 from the AP 101 or the STA 112. First, the STA 111 analyzes the acquired link information of the connection 122 (step S1201). For example, the STA 111 specifies, using the acquired TTLM, the link associated with the TID of a predetermined type of traffic used by the self-apparatus to communicate with the STA 112. For example, if the STA 111 communicates print data with the STA 112, and the traffic of the print data is associated with TID 5, the STA 111 specifies the link associated with TID 5.

The STA 111 determines whether the specified link is the same as or different from the link associated with the TID of the predetermined type of traffic in the TTLM of multi-link communication in the connection 121 (step S1202). For example, with respect to the predetermined TID, the STA 111 determines whether a bitmap in the TTLM of the connection 121 is the same as a bitmap in the TTLM of the connection 122. In other words, the STA 111 determines whether the Link IDs associated with the predetermined TID are the same. If the links associated with the predetermined TID are different from each other (YES in step S1202), the STA 111 changes the TTLM of the connection 121 so that the links associated with the predetermined TID are the same (step S1203). For example, the STA 111 can request to change the TTLM by transmitting a TID-To-Link Mapping Request frame to the AP 101. Alternatively, if the links associated with the predetermined TID are the same (NO in step S1202), the STA 111 maintains the TTLM of the connection 121. Then, the STA 111 executes communication with the STA 112 (step S1204). For example, the STA 111 transmits print data to the STA 112 to execute a print job. Upon completion of communication with the STA 112, the STA 111 may return the TTLM of the connection 121 to the state before the above control is performed (step S1205). For example, the STA 111 can request to change the TTLM of the connection 121 by transmitting the TID-To-Link Mapping Request frame to the AP 101 again. Note that if the STA 111 does not change the TTLM of the connection 121 based on the link information of the connection 122, the process can skip step S1205.

Note that the STA 111 may determine, with respect to each of two or more TIDs, whether the TTLM of the connection 122 is the same as the TTLM of the connection 121, and change the TTLM of the connection 121 so that the TTLMs match each other with respect to each TID. For example, the STA 111 may change the TTLM of the connection 121 so that the links associated with some or all of the TIDs are the same in the TTLM of the connection 122 and the TTLM of the connection 121. In this case, after changing the TTLM of the connection 121, the STA 111 may associate the predetermined type of traffic communicated with the STA 112 with one of the TIDs. For example, the STA 111 can associate the predetermined type of traffic with the TID associated with the link with a high communication rate. This allows the STA 111 to communicate with the STA 112 using the link with a high communication rate.

Fig. 13 shows an example of the sequence of frame exchange executed between the AP 101 and each STA 110 in a case where the STA 111 performs the operation shown in Fig. 12. In this example, assume that multi-link communication is performed between the AP 101 and the STA 112 (F1301). Assume also that multi-link communication is performed between the AP 101 and STA 111 (F1302). The STA 111 starts communication with the STA 112 based on input from the user or the like. For example, the STA 111 executes a search for a printer in accordance with IPP based on the input of an instruction of print processing (F1303). The search for a printer can be executed using the connections 121 and 122 established between the AP 101 and the STAs 111 and 112. Assume that the STA 111 decides the STA 112 as the transmission destination of the print job based on a response from the STA 112.

The STA 111 requests the link information of the connection 122 from the AP 101 (F1304). Upon receiving the request of the link information from the STA 111 (F1304), the AP 101 transmits a link information response that provides the link information of the connection 122 (F1305). For example, the AP 101 returns a response including information indicating the TTLM of the connection 122. The STA 111 executes link control based on the acquired TTLM of the connection 122. For example, the STA 111 determines whether the link associated with the predetermined TID in the TTLM of the connection 122 is the same as the link associated with the predetermined TID in the TTLM of the connection 121. If it is determined that these links are different from each other, the STA 111 can request the AP 101 to change the TTLM of the connection 121 so that these links are the same (F1306). For example, the STA 111 can request to change the TTLM by transmitting a TID-To-Link Mapping Request frame to the AP 101. The AP 101 changes the TTLM of the connection 121 in accordance with the request from the STA 111 (F1306). For example, the AP 101 transmits a TID-To-Link Mapping Response frame. When the STA 111 receives this frame, the TTLM of the connection 121 is changed. Then, the STA 111 communicates with the STA 112 via the connections 121 and 122 (F1307). For example, the STA 111 transmits print data to the STA 112 via the AP 101. The STA 112 executes a print job based on the received print data. Upon completion of communication with the STA 112, the STA 111 can restore the TTLM of the connection 121 (F1308). For example, the STA 111 transmits the TID-To-Link Mapping Request frame to the AP 101 again. The AP 101 changes again the TTLM of the connection 121 in accordance with the request from the STA 111. For example, the AP 101 transmits the TID-To-Link Mapping Response frame. This restores the TTLM in the connection 121 again.

### (Modification 3)

In this example, an example in which the STA 111 acquires, as the link information of the connection 122, a value indicating the communication rate of the connection 122 will be described. That is, based on the fact that the communication rate of the second communication performed in the connection 122 is high, the STA 111 controls to use multi-link communication for the first communication in the connection 121. On the other hand, based on the fact that the communication rate of the second communication is low, the STA 111 can control to use single-link communication for the first communication.

The value indicating the communication rate may be, for example, a statistic value such as a maximum value, an average value, or a minimum value of throughput actually measured in the connection 122, or a value specified by each of communication parameters used in the AP 101 or the STA 112 or a combination thereof. The communication parameters can include, for example, the number of spatial streams in MIMO, a frequency bandwidth, the number of subcarriers, MCS, and a guard interval length. MIMO is an abbreviation for Multiple Input, Multiple Output. MCS is an abbreviation for Modulation and Coding Scheme. The communication parameters can include other parameters.

In a case where the value indicating the communication rate of the connection 122 is equal to or larger than a predetermined value, the STA 111 can determine that the communication rate of the connection 122 is high, and in a case where the value indicating the communication rate of the connection 122 is smaller than the predetermined value, the STA 111 can determine that the communication rate of the connection 122 is low. The predetermined value may be a predetermined fixed value or a value determined based on the communication status or setting of the connection 121. For example, the STA 111 can specify a value indicating the communication rate of the connection 121 using the same method as that when specifying the value indicating the communication rate of the connection 122, and use, as a predetermined value, the specified value or a value (a value obtained by adding a predetermined offset value, or the like) calculated based on the specified value.

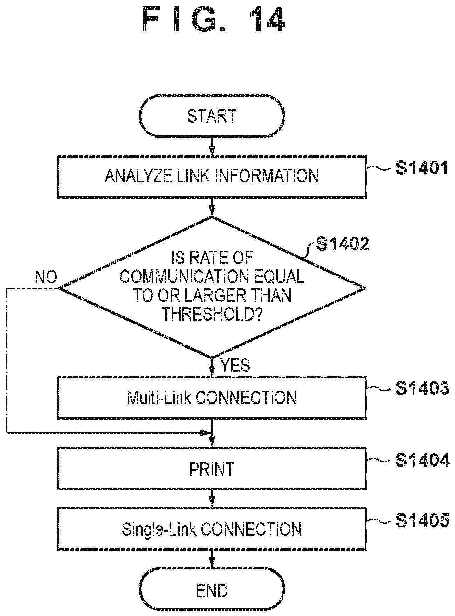

An operation in a case where the STA 111 performs link control of the connection 121 based on the value indicating the communication rate of the connection 122 will be described. Fig. 14 shows an example of the operation procedure of link control in the STA 111. This operation procedure can be executed in step S404 of Fig. 4 or 9. That is, this operation procedure can be executed when, for example, the STA 111 acquires, as the link information of the connection 122, the value indicating the communication rate from the AP 101 or the STA 112. First, the STA 111 analyzes the acquired link information of the connection 122 (step S1401). For example, the STA 111 determines whether the value indicating the communication rate of the connection 122 is equal to or larger than the predetermined value (step S1402). Note that the STA 111 may perform the determination processing by acquiring the value indicating the communication rate from the AP 101 or the STA 112, or by generating a value indicating the communication rate based on the information acquired from the AP 101 or the STA 112. That is, the STA 111 may acquire the measured value or communication parameters for generating a value indicating the communication rate from the AP 101 or the STA 112. If it is determined that the value indicating the communication rate of the connection 122 is equal to or larger than the predetermined value (YES in step S1402), the STA 111 changes to use multi-link communication in the connection 121 (step S1403). For example, the STA 111 requests the AP 101 to add a link to be used. On the other hand, if it is determined that the value indicating the communication rate of the connection 122 is smaller than the predetermined value (NO in step S1402), the STA 111 maintains the setting of the connection 121 to continue communication. Then, the STA 111 executes communication with the STA 112 (step S1404). For example, the STA 111 transmits print data to the STA 112 to execute a print job. Upon completion of communication with the STA 112, the STA 111 may return the connection 121 to the state before control for performing multi-link communication is performed (step S1405). For example, the STA 111 can request the AP 101 to delete the link used.

As described above, according to this embodiment, when communicating with another communication apparatus via an AP, a communication apparatus controls, based on information concerning communication between the AP and the other communication apparatus, which of single-link communication and multi-link communication is used between the self-apparatus and the AP. For example, based on the fact that multi-link communication is performed between the AP and the other communication apparatus, the communication apparatus controls to perform multi-link communication for communication between the self-apparatus and the AP. Alternatively, based on the fact that single-link communication is performed between the AP and the other communication apparatus, the communication apparatus performs single-link communication for communication between the self-apparatus and the AP. Alternatively, based on the fact that single-link communication is performed between the AP and the other communication apparatus, the communication apparatus performs single-link communication or multi-link communication for communication between the self-apparatus and the AP. With this configuration, in an environment in which the communication apparatus can perform multi-link communication, a difference in communication rate between communication of the communication apparatus and the AP and communication of the other communication apparatus and the AP is difficult to occur. This can avoid the communication performance of overall communication from being limited by the communication rate of one of those communications. Furthermore, it is possible to avoid a situation in which the power of the communication apparatus is wasted when the communication apparatus performs multi-link communication while the other communication apparatus performs single-link communication with the AP. As described above, according to this embodiment, it is possible to provide high communication performance to the user by multi-link communication, and provide an energy-saving product by appropriately using single-link communication.

The present disclosure can also be implemented by processing of supplying a program for implementing at least one function of the above-described embodiment to a system or apparatus via a network or a storage medium and reading out and executing the program by at least one processor in the computer of the system or apparatus. The present disclosure can also be implemented by a circuit (for example, ASIC) for implementing at least one function.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. A communication apparatus (111) for communicating, via an access point (101) configured to perform communication in accordance with a communication method defined in an IEEE 802.11 standard series, with another communication apparatus (112) connected to the access point (101), comprising:
a communication means (306) configured to perform first communication with the access point using one of single-link communication and multi-link communication;
an acquisition means (308) configured to acquire predetermined information concerning second communication performed between the other communication apparatus (112) and the access point (101); and
a control means (307) configured to execute, based on the predetermined information, control of which of single-link communication and multi-link communication is used to perform the first communication.

2. The apparatus according to claim 1, wherein
the predetermined information includes information capable of specifying which of single-link communication and multi-link communication is used to perform the second communication, and
the control means
executes the control to perform the first communication using single-link communication based on a fact that the second communication is performed using single-link communication, and
executes the control to perform the first communication using multi-link communication based on a fact that the second communication is performed using multi-link communication.

3. The apparatus according to claim 1, wherein
the predetermined information includes information capable of specifying which of single-link communication and multi-link communication is used to perform the second communication, and
the control means
executes the control to perform the first communication using one of single-link communication and multi-link communication based on a fact that the second communication is performed using single-link communication, and
executes the control to perform the first communication using multi-link communication based on a fact that the second communication is performed using multi-link communication.

4. The apparatus according to claim 1, wherein
the predetermined information includes information capable of specifying the number of links established in the second communication, and
in a case where links, the number of which is not smaller than the number of links established in the second communication, are usable in the first communication, the control means executes the control to perform the first communication using the links, the number of which is not smaller than the number of links established in the second communication.

5. The apparatus according to claim 4, wherein
the predetermined information includes information capable of further specifying a frequency band of a link used for communication of a predetermined type of traffic among the links used in the second communication, and
the control means executes the control to use, for communication of the predetermined type of traffic in the first communication, a link of the same frequency band as the frequency band of the link used for communication of the predetermined type of traffic in the second communication among the links used in the first communication.

6. The apparatus according to claim 1, wherein
the predetermined information includes information capable of specifying a link used for communication of a predetermined type of traffic among links used in the second communication, and
the control means executes the control to perform, in the first communication, communication of the predetermined type of traffic using links, the number of which is not smaller than the number of links used for communication of the predetermined type of traffic in the second communication.

7. The apparatus according to claim 1, wherein
the predetermined information includes information indicating a value concerning a communication rate of the second communication, and
the control means
executes the control to perform the first communication using single-link communication based on a fact that the value concerning the communication rate of the second communication is smaller than a predetermined value, and
executes the control to perform the first communication using multi-link communication based on a fact that the value concerning the communication rate of the second communication is not smaller than the predetermined value.

8. The apparatus according to any one of claims 1 to 7, wherein
the acquisition means acquires the predetermined information from the access point.

9. The apparatus according to claim 8, wherein
the acquisition means acquires the predetermined information using an Action frame.

10. The apparatus according to any one of claims 1 to 7, wherein
the acquisition means acquires the predetermined information from the other communication apparatus.

11. The apparatus according to claim 10, wherein
the acquisition means acquires the predetermined information using a data frame.

12. The apparatus according to any one of claims 1 to 11, wherein
in a case where the first communication is started using multi-link communication based on the predetermined information, the control means executes the control to end the use of the multi-link communication based on an end of communication with the other communication apparatus.

13. A communication method executed by a communication apparatus (111) for performing, using one of single-link communication and multi-link communication, first communication with an access point (101) configured to perform communication in accordance with a communication method defined in an IEEE 802.11 standard series and performing, via the access point (101), communication with another communication apparatus (102) connected to the access point (101), the method comprising:
acquiring predetermined information concerning second communication performed between the other communication apparatus (111) and the access point (101); and
executing, based on the predetermined information, control of which of single-link communication and multi-link communication is used to perform the first communication.

14. A computer program comprising instructions which, when the program is executed by a computer, cause the computer to carry out the method of claim 13.
